# EUROPEAN PATENT APPLICATION

(11) **EP 4 745 646 A1**
(43) Date of publication of application: **20.05.2026**
(21) Application number: 24838871.2
(22) Date of filing: 11.07.2024
(51) Int. Cl.: G02B 7/09

(54) **OPTICAL DRIVING DEVICE**

(30) Priority: 13.07.2023 CN 202310863148
(71) Applicant: LU, Sheng, Shanghai 201104 (CN); PIACT TECHNOLOGY (SHANGHAI) CO., LTD, Shanghai 201611 (CN)
(72) Inventor: KANO, Takehiro, Shanghai 201104 (CN); LU, Sheng, Shanghai 201104 (CN)
(74) Representative: Balder IP Law, S.L.
(86) International application number: PCT/CN2024/105001
(87) International publication number: WO 2025/011619

(57) **Abstract**

Disclosed in the present invention is an optical driving device comprising a straight-moving mechanism. In the straight-moving mechanism composed of a fixed component and a movable moving component guided by means of two or more straight-moving guide parts, a driving component for driving the moving component is configured between the two or more straight-moving guide parts, and the driving component is pressed against the fixed component or the moving component or related components by means of a spring. A microsphere layer formed by coating a solvent mixed with microspheres is provided on a microsphere rolling surface of each straight-moving guide part, and at least one of the plurality of straight-moving guide parts has a V-shaped cross-section or a circular cross-section, etc.

## Description

### CROSS REFERENCE TO RELATED APPLICATIONS

The present application is a continuation of the PCT International Application No. PCT/CN2024/105001, entitled "OPTICAL DRIVING DEVICE" and filed on July 11, 2024, which claims priority to Chinese Patent Application No. 202310863148.7, entitled "OPTICAL DRIVING DEVICE" and filed on July 13, 2023, each of which is incorporated herein by reference.

### TECHNICAL FIELD

Embodiments of the present disclosure relate to an optical driving device.

### BACKGROUND

Regarding the structures of optical driving devices incorporated in camera modules of existing portable terminals such as mobile phones, the following patent documents have been published or filed:
Reference Document 1: Japanese Patent Application Publication No. 2009-47798
Reference Document 2: Japanese Patent Application Publication No. 2011-233790
Reference Document 3: International Patent Application Publication No. WO2011/055504

Reference document 1 discloses a driving device utilizing a stepping motor for actuation, guide posts for guidance, and a coil spring to press a movable member against a drive screw. However, this structure is bulky, and the sliding friction resistance inherent in the guide-post guidance mechanism is high, which impedes smooth driving.

Reference document 2 discloses a driving device employing an ultrasonic piezoelectric ceramic actuator, which also uses a guide-post guidance mechanism. The significant sliding friction resistance of the guide-post guidance mechanism is detrimental to driving performance. Furthermore, the positioning of the ultrasonic piezoelectric ceramic in the XYZ directions is not well-defined, making the ultrasonic piezoelectric ceramic prone to installation misalignment and resulting in substantial positioning errors.

Reference document 3 discloses a driving device structured as a piezoelectric smooth impact drive mechanism (SIDM). In this design, a carbon fiber rod is subjected to dual clamping by elastic members and two opposing V-shaped supports on the driven member, leading to relatively high friction resistance and leaving room for improvement in drive efficiency.

Additionally, the motor is typically subjected to a pure water cleaning process. In conventional driving structures using the guide-post guidance mechanism, grease or lubricant is often applied to the guide portions to reduce sliding resistance. However, during the pure water cleaning process, such grease or lubricant is easily washed away, creating a dilemma between product cleanliness and the reliability of lubrication.

Moreover, although lubricating grease provides some lubrication, its paste-like, gel-like nature imparts inherent viscosity. This viscosity creates a sticky drag force, which is unfavorable for the driving performance of the product.

Furthermore, conventional ball screw motors have a relatively large volume, which is disadvantageous for miniaturization.

### SUMMARY

In view of the problems existing in the prior art, embodiments of the present disclosure provide an optical driving device. The optical driving device includes a fixed member and a movable member. The fixed member has a first guide surface, and the movable member has a second guide surface. The first guide surface and the second guide surface oppose each other to jointly guide the movable member to move in a linear direction. The optical driving device includes a driving member between the first guide surface and the second guide surface or parallel to the first guide surface or the second guide surface. A gap is between the first guide surface and the second guide surface, and a micro-ball layer composed of a plurality of micro-balls is in the gap. The optical driving device further includes a spring that applies interaction forces to the driving member, the fixed member, and the movable member. The spring is configured to cause the plurality of micro-balls to be pressed against at least one of the first guide surface and the second guide surface.

The spring is configured as a flat spring.

The driving member is configured as a piezoelectric driving member.

The driving member is configured as an electromagnetic driving member.

The driving member is configured as a shape memory alloy driving member.

The driving member is configured a stepping motor.

The first guide surface of the fixed member and the second guide surface of the movable member have opposing V-shaped segments.

The first guide surface of the fixed member and the second guide surface of the movable member have opposing circular or arc-shaped, or semicircular or semi-arc-shaped, or partial circular or partial arc-shaped segments.

The driving member is a piezoelectric electromechanical conversion element that, by utilizing pressing force, causes a friction member and a driven member to press against each other and drives the driven member through friction.

The micro-ball layer is provided on a side opposite to a friction contact surface of the friction member.

The micro-balls are added into a solvent in a specified amount to form a mixed solvent containing the micro-balls. The mixed solvent is applied on the first guide surface or the second guide surface. A number of the micro-balls is determined based on a volume of the gap or an area of the first guide surface or the second guide surface.

The solvent is a volatile or non-volatile solvent.

The solvent is a water-soluble or non-water-soluble solvent.

The micro-balls are added into a volatile solvent and applied. The volatile solvent then evaporates, leaving the micro-balls to form a micro-ball layer for rolling.

The micro-balls are added into a volatile solvent containing 1% to 10% of an oily substance and applied. The volatile solvent then evaporates, forming a film of the oily substance on at least one of the micro-balls and the first guide surface and the second guide surface. Stickiness of the oily substance film can retain the micro-balls on the first guide surface or the second guide surface, forming a thin-film micro-ball layer for rolling.

Two side surfaces of the V-shaped segment may be planar or curved surfaces.

The piezoelectric driving member is configured as an ultrasonic piezoelectric driving device. Positioning parts for restricting displacement of the piezoelectric ceramic are provided on front, rear, left, and right sides perpendicular to a working surface of the piezoelectric ceramic.

The positioning parts are disposed on the movable member, the fixed member, or the spring.

The first guide surface and the second guide surface have opposing planar segments.

### BRIEF DESCRIPTION OF THE DRAWINGS

FIG. 1 is a perspective side view of a stepping-motor-driving camera 800 according to Embodiment 1 of the present disclosure;
FIG. 2 is a top view of the stepping-motor-driving camera 800 according to Embodiment 1 of the present disclosure;
FIG. 3 is a cross-sectional view of the stepping-motor-driving camera 800 according to Embodiment 1 of the present disclosure, taken along line A-A in FIG. 2;
FIG. 4-a is an enlarged view of portion C of the stepping-motor-driving camera 800 of FIG. 3;

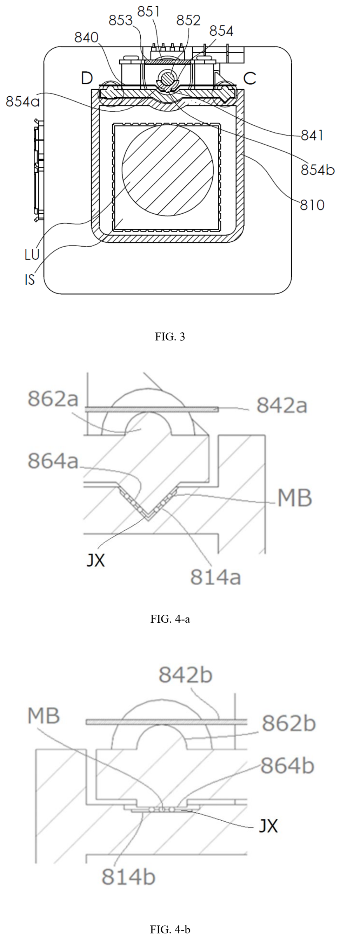

FIG. 4-b is an enlarged view of portion D of the stepping-motor-driving camera 800 of FIG. 3;

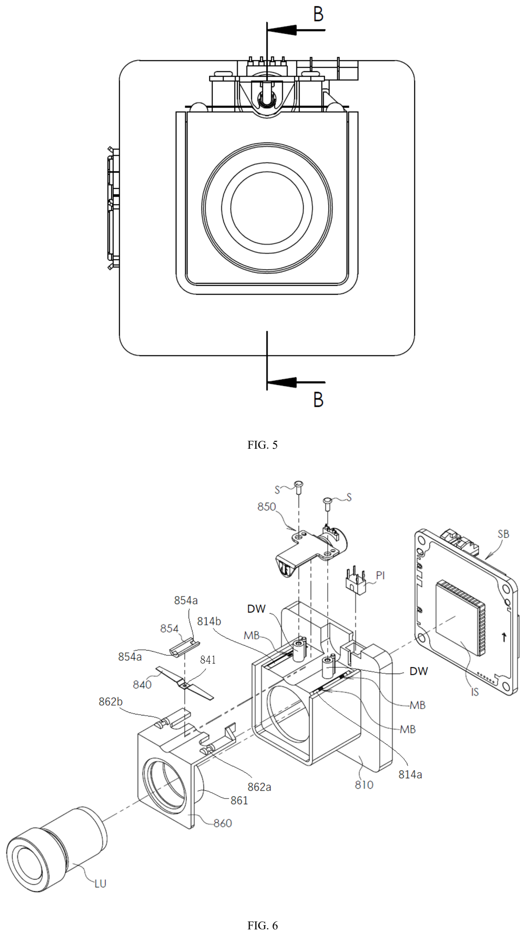

FIG. 5 is a front view of the stepping-motor-driving camera 800 according to Embodiment 1 of the present disclosure;
FIG. 6 is an exploded view of the stepping-motor-driving camera 800 according to Embodiment 1 of the present disclosure;

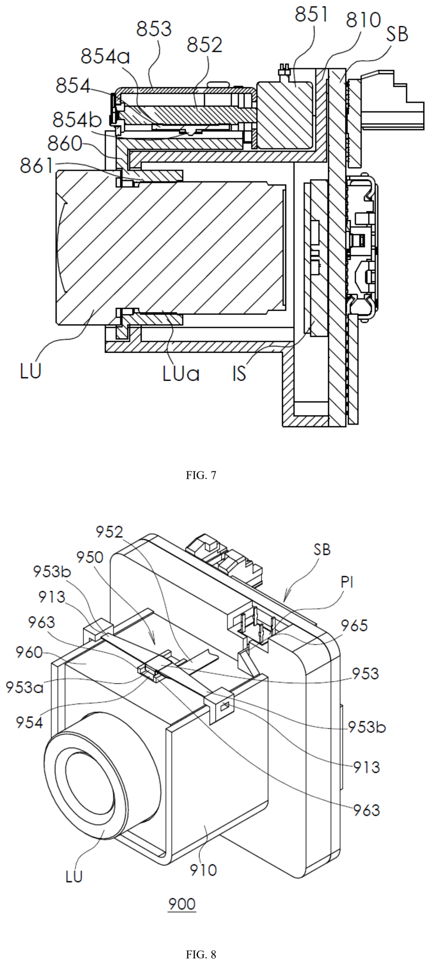

FIG. 7 is a cross-sectional view of the stepping-motor-driving camera 800 according to Embodiment 1 of the present disclosure, taken along line B-B in FIG. 5;
FIG. 8 is a perspective side view of a piezoelectric-ultrasonic-driving camera 900 according to Embodiment 2-1 of the present disclosure;

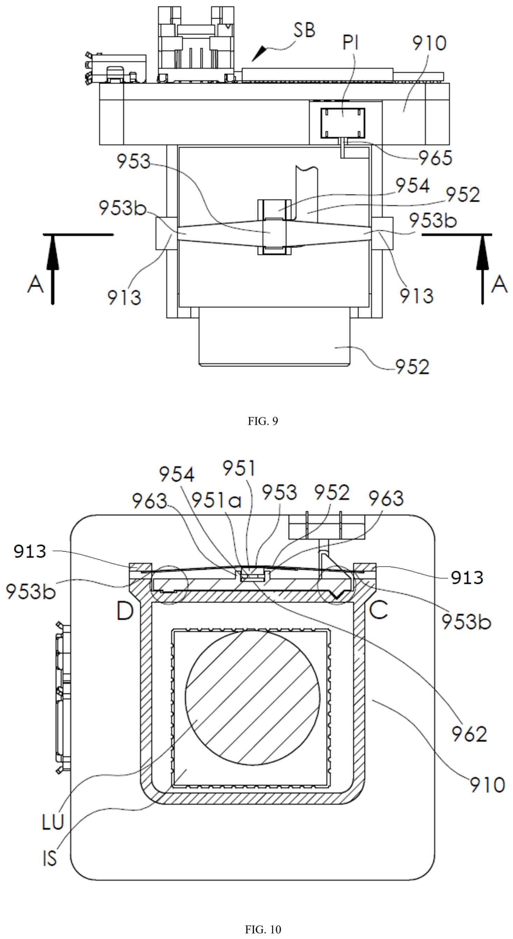

FIG. 9 is a top view of the piezoelectric-ultrasonic-driving camera 900 according to Embodiment 2-1 of the present disclosure;
FIG. 10 is a cross-sectional view of the piezoelectric-ultrasonic-driving camera 900 according to Embodiment 2-1 of the present disclosure, taken along line A-A in FIG. 9;

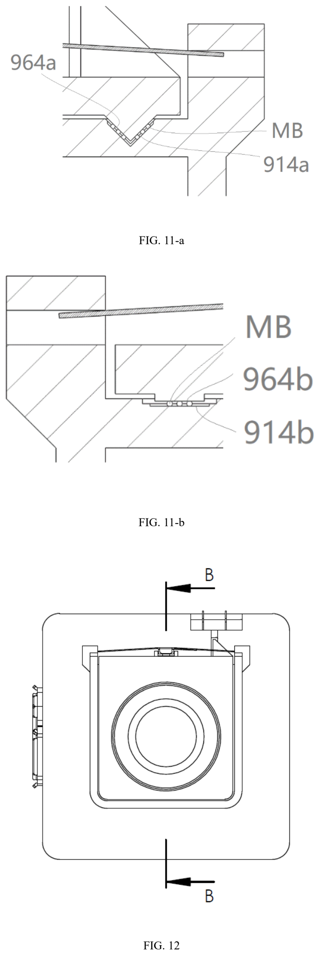

FIG. 11-a is an enlarged view of portion C of the piezoelectric-ultrasonic-driving camera 900 of FIG. 10;
FIG. 11-b is an enlarged view of portion D of the piezoelectric-ultrasonic-driving camera 900 of FIG. 10;
FIG. 12 is a front view of the piezoelectric-ultrasonic-driving camera 900 according to Embodiment 2-1 of the present disclosure;

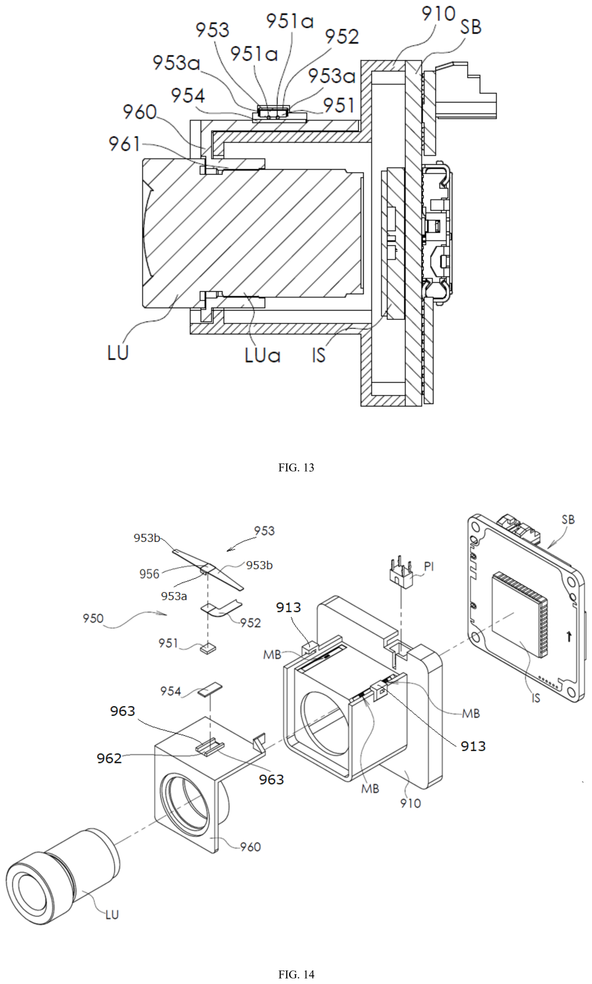

FIG. 13 is a cross-sectional view of the piezoelectric-ultrasonic-driving camera 900 according to Embodiment 2-1 of the present disclosure, taken along line B-B in FIG. 12;
FIG. 14 is an exploded view of the piezoelectric-ultrasonic-driving camera 900 according to Embodiment 2-1 of the present disclosure;

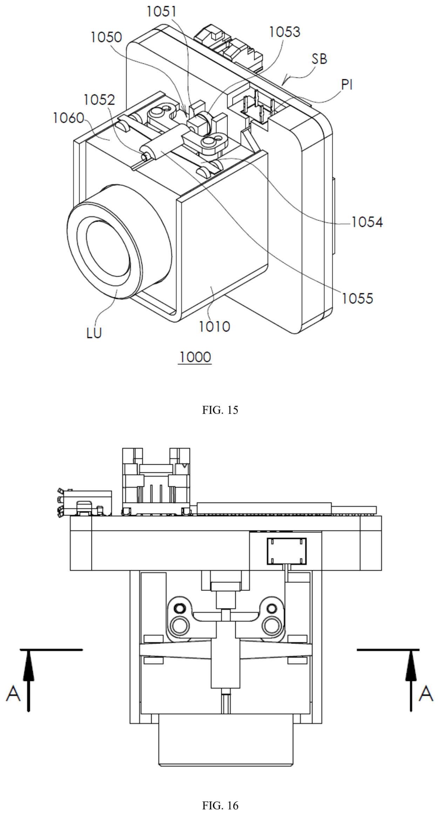

FIG. 15 is a perspective side view of a piezoelectric-SIDM-driving camera 1000 according to Embodiments 3 and 4 of the present disclosure;
FIG. 16 is a top view of the piezoelectric-SIDM-driving camera 1000 according to Embodiment 3 and 4 of the present disclosure;

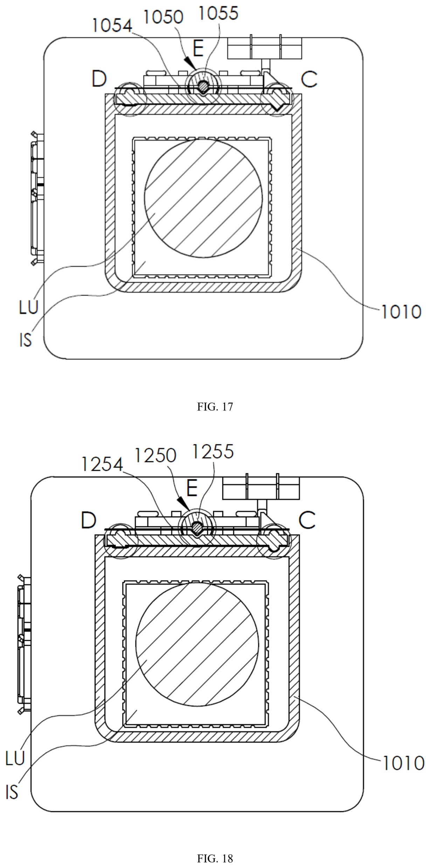

FIG. 17 is a cross-sectional view of the piezoelectric-SIDM-driving camera 1000 according to Embodiment 3 of the present disclosure, taken along line A-A in FIG. 16;
FIG. 18 is a cross-sectional view of the piezoelectric-SIDM-driving camera 1200 according to Embodiment 4 of the present disclosure, taken along line A-A in FIG. 16;

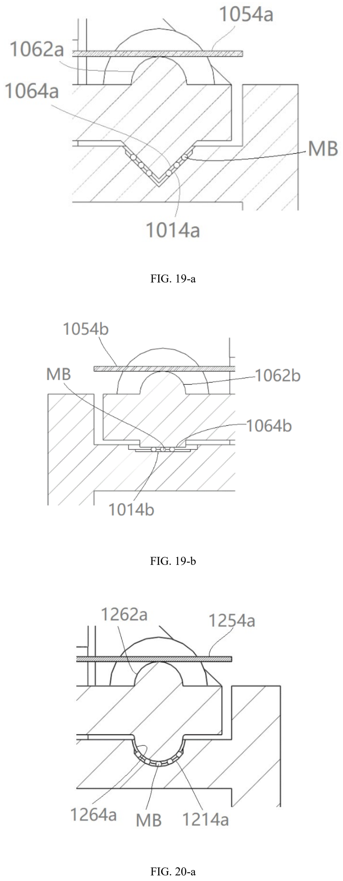

FIG. 19-a is an enlarged view of portion C of the piezoelectric-SIDM-driving camera 1000 of FIG. 17;
FIG. 19-b is an enlarged view of portion D of the piezoelectric-SIDM-driving camera 1000 of FIG. 17;

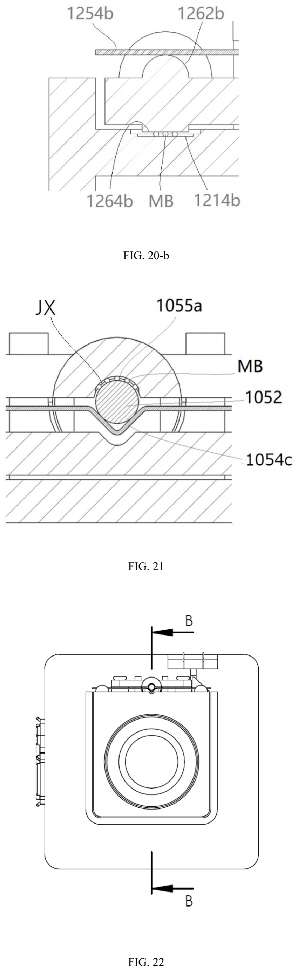

FIG. 20-a is an enlarged view of portion C of the piezoelectric-SIDM-driving camera 1200 of FIG. 18;
FIG. 20-b is an enlarged view of portion D of the piezoelectric-SIDM-driving camera 1200 of FIG. 18;
FIG. 21 is an enlarged view of portion E of the piezoelectric-SIDM-driving camera of FIG. 17 and FIG. 18;
FIG. 22 is a front view of the piezoelectric-SIDM-driving camera 1000 according to Embodiment 3 and 4 of the present disclosure;

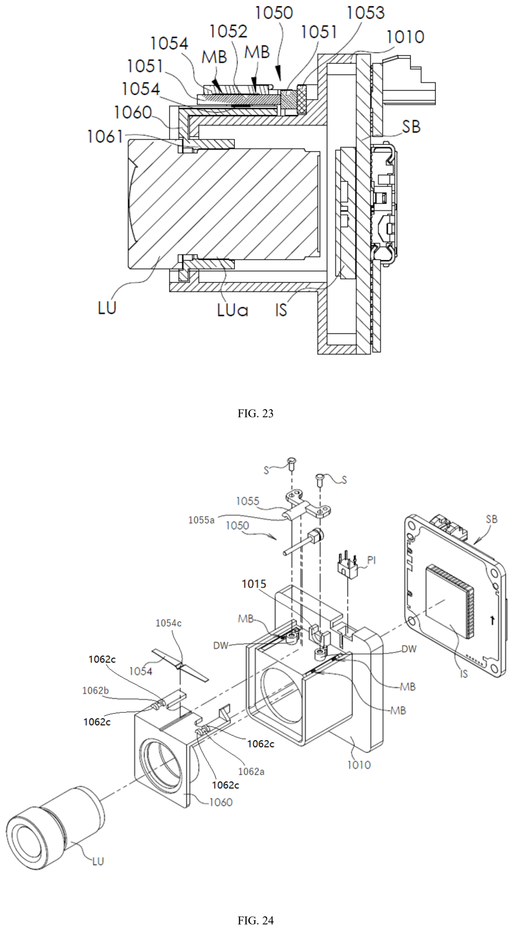

FIG. 23 is a cross-sectional view of the piezoelectric-SIDM-driving camera 1000, taken along line B-B in FIG. 22;
FIG. 24 is an exploded view of the piezoelectric-SIDM-driving camera 1000 according to Embodiment 3 of the present disclosure;

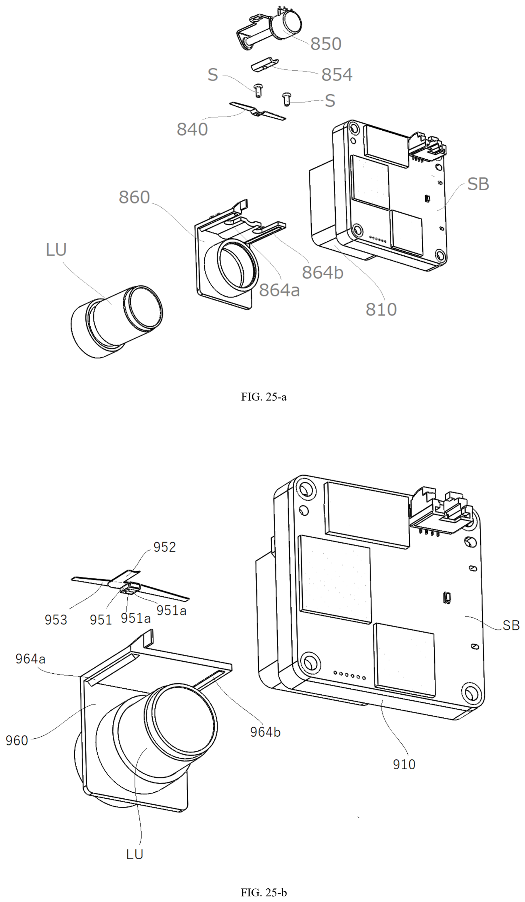

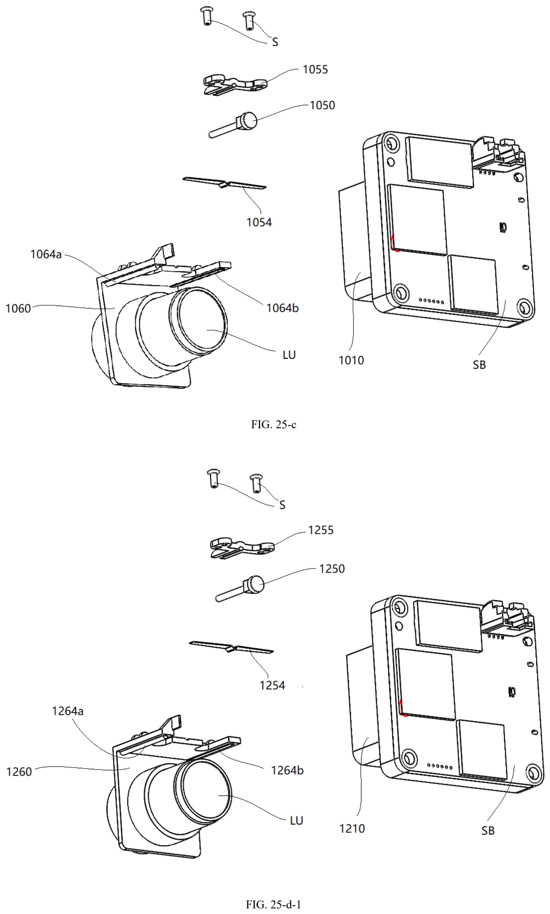

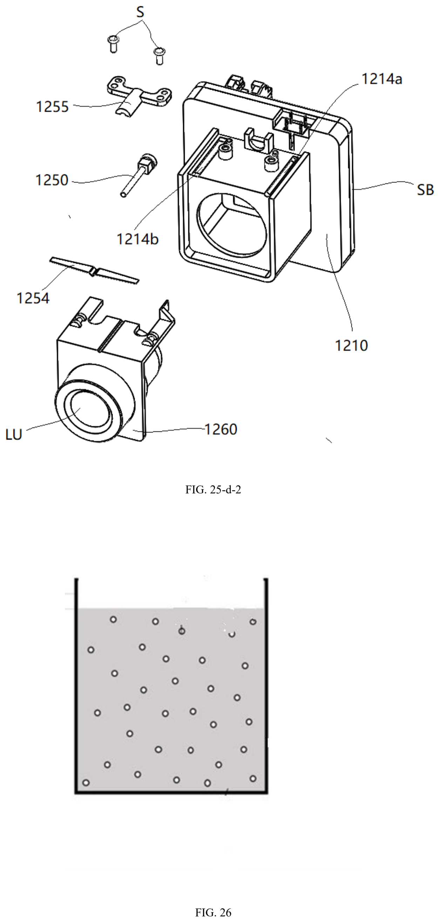

FIG. 25-a is a rear exploded view of the stepping-motor-driving camera 800 according to Embodiment 1 of the present disclosure;
FIG. 25-b is a rear exploded view of the piezoelectric-ultrasonic-driving camera 900 according to Embodiment 2 of the present disclosure;
FIG. 25-c is a rear exploded view of the piezoelectric-SIDM-driving camera 1000 according to Embodiment 3 of the present disclosure;
FIG. 25-d-1 is a rear exploded view of the piezoelectric-SIDM-driving camera 1200 according to Embodiment 4 of the present disclosure;
FIG. 25-d-2 is a front exploded view of the piezoelectric-SIDM-driving camera 1200 according to Embodiment 4 of the present disclosure;
FIG. 26 is a schematic diagram illustrating a state where micro-balls and a solvent are stirred in a container to form a micro-ball solution;

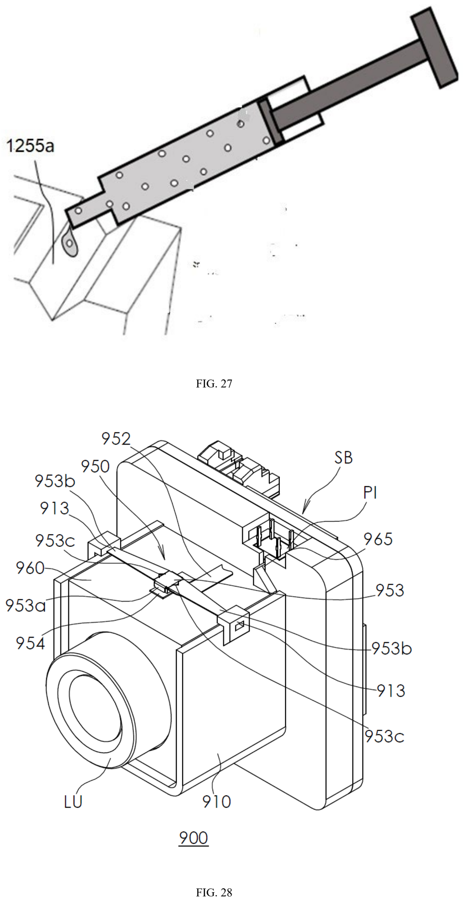

FIG. 27 is a schematic diagram illustrating the uniformly stirred micro-ball solution being applied onto a micro-ball rolling surface (guide surface);
FIG. 28 is a perspective side view of a piezoelectric-ultrasonic-driving camera according to Embodiment 2-2 of the present disclosure;

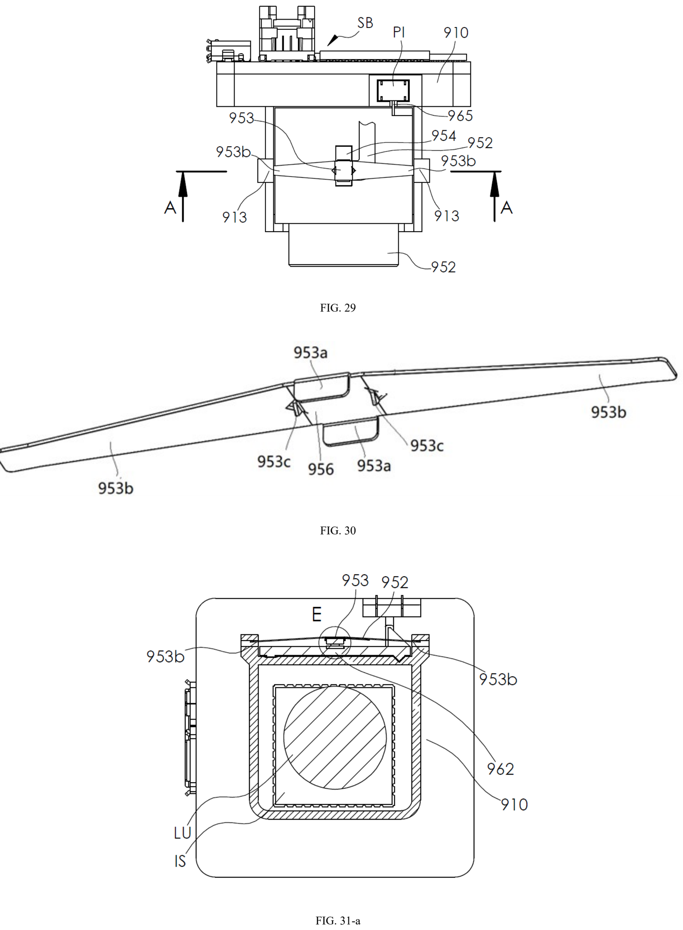

FIG. 29 is a top view of the piezoelectric-ultrasonic-driving camera 900 according to Embodiment 2-2 of the present disclosure;
FIG. 30 is a perspective side view of a flat spring 953 according to Embodiments 2 and 2 of the present disclosure;

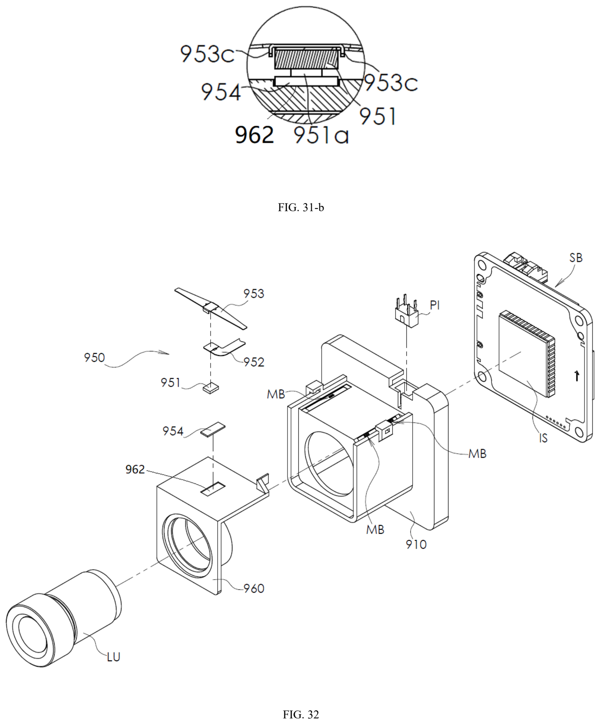

FIG. 31-a is a cross-sectional view of the piezoelectric-ultrasonic-driving camera 900 according to Embodiment 2-2 of the present disclosure, taken along line A-A in FIG. 29;
FIG. 31-b is an enlarged view of portion E of the piezoelectric-ultrasonic-driving camera 900 of FIG. 31-a;
FIG. 32 is an exploded view of the piezoelectric-ultrasonic-driving camera 900 according to Embodiment 2-2 of the present disclosure;

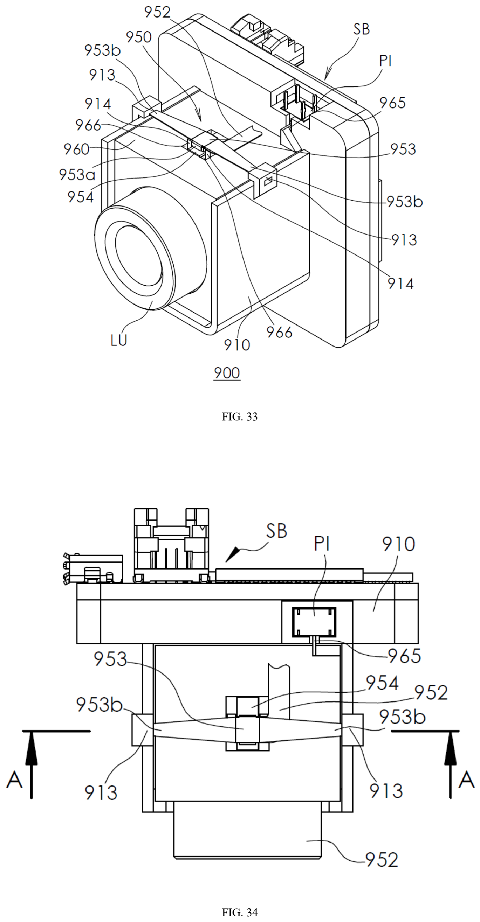

FIG. 33 is a perspective side view of a piezoelectric-ultrasonic-driving camera according to Embodiment 2-3 of the present disclosure;
FIG. 34 is a top view of the piezoelectric-ultrasonic-driving camera 900 according to Embodiment 2-3 of the present disclosure;

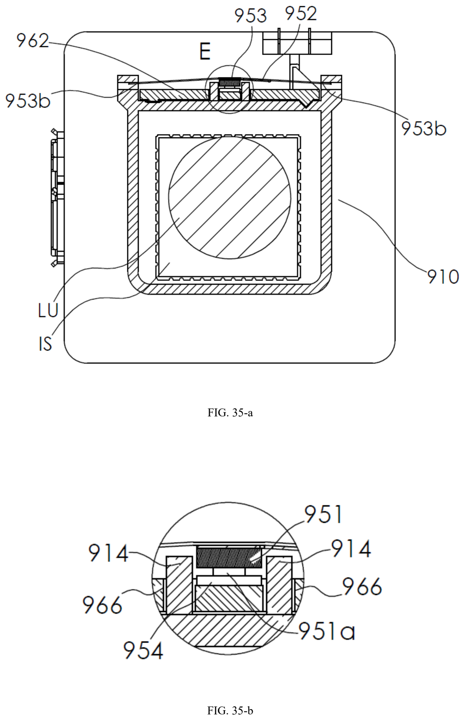

FIG. 35-a is a cross-sectional view of the piezoelectric-ultrasonic-driving camera 900 according to Embodiment 2-3 of the present disclosure, taken along line A-A in FIG. 34;
FIG. 35-b is an enlarged view of portion E of the piezoelectric-ultrasonic-driving camera 900 of FIG. 35-a;

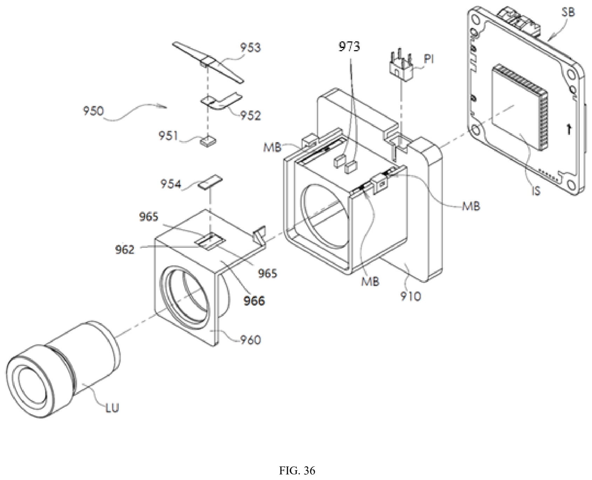

FIG. 36 is an exploded view of the piezoelectric-ultrasonic-driving camera 900 according to Embodiment 2-3 of the present disclosure.

Reference numerals in the accompanying drawings are listed below:
DW positioning portion, IS image sensor chip, JX gap, LU lens, MB micro-ball, PI photoelectric sensor,
S fixing screw, SB chip substrate, XW position-limiting portion,
800 stepping-motor-driving camera, 810 fixed frame, 814a V-shaped segment,
814b planar segment, 840 flat spring, 841 spring positioning hole,
842a spring arm a, 842b spring arm b, 850 stepping motor assembly,
851 stepping motor, 852 drive screw, 853 stepping motor fixing plate,
854 screw follower, 854a thread engagement portion, 854b screw follower positioning column,
860 movable frame, 861 lens positioning hole, 862a spring support a,
862b spring support b, 864a V-shaped segment, 864b planar segment,
900 piezoelectric-ultrasonic-driving camera, 910 fixed frame, 913 spring positioning portion,
914 piezoelectric ceramic positioning portion,
914a V-shaped segment, 914b planar segment, 950 ultrasonic drive assembly,
951 ultrasonic piezoelectric ceramic, 951a super-hard alloy block, 952 piezoelectric ceramic flexible printed circuit (FPC),
953 flat spring, 953a piezoelectric ceramic Z-axis positioning, 953b spring arm,
953c position-limiting portion, 954 steel plate, 956 piezoelectric ceramic mounting portion,
960 movable frame, 961 lens positioning hole, 962 steel plate mounting surface,
963 position-limiting portion, 964a V-shaped segment, 964b planar segment,
965 through-hole, 966 movable frame planar portion, 973 position-limiting portion,
1000 piezoelectric-SIDM-driving camera, 1010 fixed frame, 1014a V-shaped segment,
1014b planar segment, 1050 laminated piezoelectric drive assembly, 1051 laminated piezoelectric ceramic,
1052 carbon fiber rod, 1053 counterweight, 1054 flat spring,
1054a spring arm a, 1054b spring arm b, 1054c V-shaped pressing portion,
1055 drive support, 1055a micro-ball rolling surface, 1060 movable frame,
1061 lens positioning hole, 1062a spring support a, 1062b spring support b,
1062c spring Z-axis limiting portion,
1064a V-shaped segment, 1064b planar segment, 1015 SIDM fixing portion,
1214a semi-circular segment,
1250 laminated piezoelectric drive assembly, 1254 flat spring, 1254a spring arm a,
1254b spring arm b, 1255 drive support, 1255a micro-ball rolling surface,
1260 movable frame,
1264a semi-circular segment, 1264b planar segment.

### DETAILED DESCRIPTION OF THE EMBODIMENTS

The specific embodiments of the present disclosure are described in detail below with reference to the accompanying drawings. However, it should be understood that the present disclosure is not limited to the embodiments described herein, and the technical concepts of the present disclosure may be implemented in combination with other known technologies or other technologies that perform functions similar to those of such known technologies. The combination of features described in the embodiments is not necessarily essential to the inventive solution.

In the description of the following specific embodiments, directional terms such as "front," "rear," "left," "right," "outer," "inner," "outward," "inward," "axial," and "radial" are used to clearly illustrate the structure and operation of the present disclosure. These terms should be understood as convenient or relative terms and should not be construed as limiting. Unless otherwise specified, qualifiers such as "first" and "second" do not indicate any order, quantity, or importance but are merely used to distinguish one technical feature from another within the technical solution. Similarly, qualifiers such as "a" or "an" do not denote a limitation of quantity but refer to a technical feature not previously mentioned. Likewise, modifiers such as "approximately" or "substantially" preceding a numeral generally include the exact number, and their specific meaning should be interpreted in light of the context. Furthermore, unless a noun is modified by a specific quantity indicator, it should be interpreted as including both the singular and plural forms, meaning that the technical solution may include either a single instance or multiple instances of the technical feature.

The embodiments described in this specification are only preferred specific embodiments of the present disclosure. The above embodiments are provided solely to illustrate the technical solutions of the present disclosure and should not be construed as limiting the scope of the present disclosure. Any technical solutions that can be derived by those skilled in the art through logical analysis, reasoning, or limited experimentation based on the inventive concepts of the present disclosure shall fall within the scope of the present disclosure.

The coordinate axes used in this specification are defined as follows: the optical axis is the Z-axis; the horizontal direction perpendicular to the Z-axis is the X-axis; and the vertical direction perpendicular to the Z-axis is the Y-axis.

The specific embodiments of the present disclosure are described in detail below with reference to the accompanying drawings.

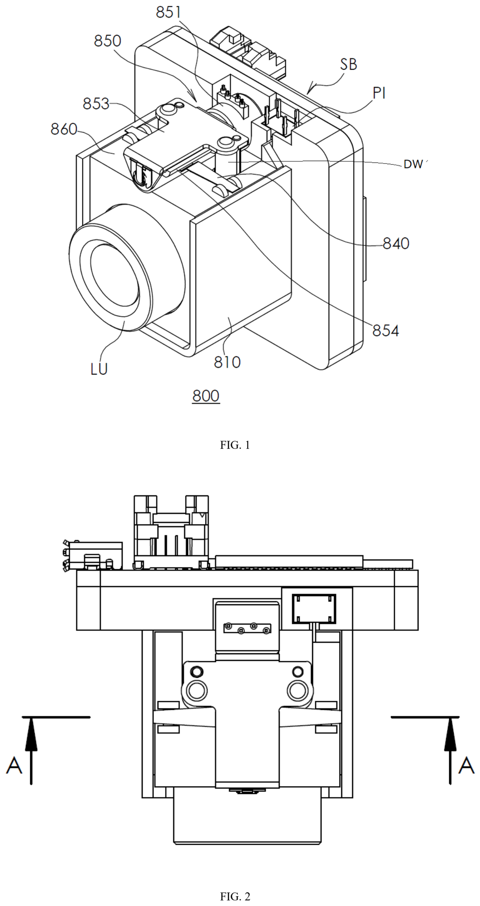

Hereinafter, embodiments of the micro-ball guided driving device are described in detail with reference to FIG. 1 to FIG. 23.

### Embodiment 1:

FIG. 1 is a perspective side view of a stepping-motor-driving camera 800 of the present disclosure. The camera employs a stepping motor as the driving component and utilizes a micro-ball guidance mechanism. The camera includes a lens LU, a stepping motor assembly 850, a fixed frame 810, a movable frame 860, and a chip substrate SB carrying a photosensitive chip.

As depicted in the exploded views of FIG. 6 and FIG. 25-a, the chip substrate SB carrying the photosensitive chip is provided at a rear portion of the fixed frame 810. A front portion of the fixed frame is generally rectangular, featuring a circular opening at the front end in the optical axis direction. This structure accommodates the movable frame 860, which holds the lens LU via a lens positioning hole 861. A photoelectric sensor PI for detecting a displacement of the movable frame 860 is positioned above the rear portion. A positioning portion DW for positioning the stepping motor assembly 850 is provided on the upper surface of the front portion of the fixed frame 810, allowing the stepping motor assembly 850 to be secured with screws s. Furthermore, a V-shaped segment 814a and a planar segment 814b which are parallel to the optical axis are provided on the upper surface of the front portion of the fixed frame 810. The surfaces of these segments are each coated with a micro-ball layer composed of micro-balls MB, where the micro-balls are made of plastic. Regarding the method of applying the micro-balls, as illustrated in FIG. 26, a specified quantity of micro-balls MB is uniformly mixed with a solvent in a container at a predetermined ratio. Subsequently, as shown in FIG. 27, the mixture containing the micro-balls and solvent is applied-either automatically or manually-in a controlled amount to the surfaces of the V-shaped segment 814a and planar segment 814b before the assembly of the stepping-motor-driving camera 800. The solvent may be water-soluble or non-water-soluble, volatile or non-volatile. It is typically a lubricant, lubricating oil, or a mixed solution characterized by low viscosity, good lubricity, and moderate fluidity.

The movable frame 860 has a planar portion. Cylindrical supports 862a and 862b are provided on the upper surface of the planar portion. Two ends of each support 862a and 862b are equipped with position-limiting portions XW configured to restrict displacement of a flat spring 840 relative to the movable frame 860 along the optical axis direction during operation. As shown in FIG. 25-a, the movable frame 860 has a V-shaped segment 864a opposing the V-shaped segment 814a of the fixed frame 610 and a planar segment 864b opposing the planar segment 814b of the fixed frame 810 on a side opposite to the upper surface of the movable frame 860.

The spring is a flat spring 840. Its middle portion is provided with a spring positioning hole 841. The spring has a spring arm 841a and a spring arm 842b respectively on two sides of the middle portion.

The screw follower 854 is an arc-shaped component. At both ends on the inner arc side along its axis, thread engagement portions 854a (not shown in FIG. 6) are formed to engage with the threads of the drive screw 852. As shown in FIG. 7, the central bottom portion of the screw follower 854 is provided with a screw follower positioning column 854b, which has a conical head and is configured to securely mate with the spring positioning hole 841 on the flat spring 840.

As shown in FIG. 3 and FIG. 7, the stepping motor assembly 850 consists of a stepping motor 851, a drive screw 852, and a stepping motor fixing plate 853.

The assembly process of the stepping-motor-driving camera 800 is illustrated in FIG 6. First, the flat spring 840 is mounted onto the movable frame 860 by aligning its arms 842a and 842b with the supports 862a and 862b located between the position-limiting portions XW of the movable frame 860. Next, the screw follower positioning column 854b of the screw follower 854 is aligned with the spring positioning hole 841 in the central portion of the flat spring 840. The screw follower 854 is then placed on the flat spring 840, with its axis oriented along the optical axis direction. Subsequently, the movable frame 860 and the fixed frame 810 are first aligned and positioned based on the alignment where the V-shaped segment 814a and planar segment 814b of the fixed frame 810 and the corresponding V-shaped segment 864a and planar segment 864b of the movable frame 860 face each other to form gaps JX. Alternatively, other assembly references may be established as needed, though not detailed here.

The movable frame 860, flat spring 840, and screw follower 854 are assembled together onto the fixed frame 810. Afterward, the positioning holes on the stepping motor assembly 850 and the positioning holes on the positioning portions DW of the fixed frame 810 are aligned along the optical axis direction and secured using screws S. Once fixed, the drive screw 852 of the stepping motor assembly 850 engages with the thread engagement portions 854a of the screw follower 854. As shown in FIG. 7, the conical portion of the positioning column 854b of the screw follower 854 has a tip diameter smaller than its base diameter. The inner diameter of the spring positioning hole 841 in the flat spring 840 ranges between the tip diameter and the base diameter of the positioning column 854b. After assembly, the central spring positioning hole 841 of the flat spring 840 is subjected to a downward pressure applied by the conical surface of the positioning column 854b of the screw follower 854. Meanwhile, as shown in the enlarged views of portions C and D of FIG. 3, FIG. 4-a, and FIG. 4-b, at the positions where the spring arm 842a and the spring arm 842b of the flat spring 840 press against the supports 862a and 862b of the movable frame 860 on both sides, this pressure generates two component forces. These component forces respectively exert pressure on the micro-balls located directly below the supports 862a and 862b of the movable frame 860, as well as on the two columns of micro-ball guidance formed by the aforementioned gap JX and the intermediate micro-ball layer MB. Consequently, the guiding surfaces of the V-shaped segment 864a and planar segment 864b of the movable frame 860 and the V-shaped segment 814a and planar segment 814b of the fixed framed 810 press against the micro-balls within the gaps JX, establishing two columns of micro-ball guidance parallel to the optical axis.

When an electrical signal is applied to the stepping motor assembly 850, causing the drive screw 852 to rotate, the spring arm 842a and spring arm 842b of the flat spring 840 press against the supports 862a and 862b of the movable frame 860 due to the aforementioned spring force, generating static friction. Simultaneously, the central spring positioning hole 841 of the flat spring 840 is positioned by the positioning column 854b of the screw follower 854. This prevents both the screw follower 854 and the flat spring 840 from moving together with the rotating drive screw 852 in a direction perpendicular to the optical axis. Moreover, the interaction force between the spring positioning hole 841 of the flat spring 840 and the positioning column 854b of the screw follower 854 ensures tight engagement between the threads of the drive screw 852 and the threads of the screw follower 854, thereby limiting backlash error during threaded drive operation. Thus, the rotation of the drive screw 852 can only drive the screw follower 854, the flat spring 840, and the movable frame 860 together to perform linear motion relative to the fixed frame 810 along the direction defined by the two columns of micro-ball guidance. During this motion, the micro-balls roll correspondingly on the surfaces of the micro-ball guidance formed by the V-shaped segment 814a and planar segment 814b of the fixed frame 810 and the V-shaped segment 864a and planar segment 864b of the movable frame 860. As a result, the movable frame 860, to which the lens is fixed, moves relative to the chip substrate fixed to the fixed frame 810, thereby achieving autofocus.

Additionally, after assembly, when the solvent used is water-soluble, the component can undergo a pure water cleaning process. In this case, the solvent dissolves, and after cleaning, the micro-ball layer remains-either fully or partially-on the surface of the micro-ball guidance portions. If the solvent is non-water-soluble, it does not readily dissolve in water and can therefore remain on the surfaces of the micro-ball guidance portions together with the micro-balls. When the solvent is non-volatile, the situation is similar to the above. If the solvent is volatile, it evaporates after application, leaving only the micro-balls on the surfaces of the micro-ball guidance portions. This condition is more suitable for pure water cleaning process.

Compared to conventional stepping-motor-driving devices that use guide-post guidance, the configuration of the present disclosure adopts a rolling guidance structure utilizing micro-ball guidance and flat spring pressing. This significantly reduces sliding friction resistance compared to the conventional guide-post guidance method, resulting in smoother drive of the stepping motor. Furthermore, the flat spring pressing mechanism is simpler and more compact than the conventional coil spring pressing structures.

The micro-ball guidance in this embodiment employs a solvent with low viscosity, good lubricity, and superior fluidity compared to gel-like substances such as lubricating grease. This reduces viscous drag during the device's operation relative to conventional designs that use lubricating grease, leading to better and smoother driving performance. Moreover, when a volatile solvent is used, the solvent evaporates after the micro-ball mixture is applied, leaving only the micro-balls on the guide surfaces. This facilitates pure water cleaning process.

### Embodiment 2-1:

FIG. 8 is a perspective side view of a piezoelectric-ultrasonic-driving camera 900 of the present disclosure. The camera employs ultrasonic piezoelectric ceramic as the driving component and utilizes a micro-ball guidance mechanism. The camera includes a lens LU, an ultrasonic drive assembly 950, a fixed frame 910, a movable frame 960, and a chip substrate SB carrying a photosensitive chip.

As depicted in the exploded views of FIG. 14 and FIG. 25-b, the chip substrate SB carrying the photosensitive chip is provided at a rear portion of the fixed frame 910. A front portion of the fixed frame is generally rectangular, featuring a circular opening at the front end in the optical axis direction. This structure accommodates the movable frame 960, which holds the lens LU via a lens positioning hole 961. A photoelectric sensor PI for detecting a displacement of the movable frame 960 is positioned above the rear portion. Spring positioning portions 913 are provided respectively at the central positions of both upper sides of the front portion of the fixed frame 910. A V-shaped segment 914a and a planar segment 914b which are parallel to the optical axis are provided on the upper surface of the front portion of the fixed frame 910. The surfaces of these segments are respectively coated with a micro-ball layer composed of micro-balls, where the micro-balls are made of plastic such as nylon. Regarding the method of applying the micro-balls, as illustrated in FIG. 26, a specified quantity of micro-balls MB is uniformly mixed with a solvent in a container at a predetermined ratio. As shown in FIG. 27, the mixture containing the micro-balls and solvent is applied-either automatically or manually-in a controlled amount to the surfaces of the V-shaped segment 914a and planar segment 914b before the assembly of the stepping-motor-driving camera 800. The solvent may be water-soluble or non-water-soluble, volatile or non-volatile. It is typically a lubricant, lubricating oil, or a mixed solution characterized by low viscosity, good lubricity, and moderate fluidity.

The movable frame 960 includes a planar portion. A positioning portion 962 configured to restrict the position of a steel plate 954 is provided on the upper surface of the planar portion. In the X-direction perpendicular to the optical axis, two parallel position-limiting portions 963 are arranged to limit displacement of the ultrasonic piezoelectric ceramic 951. These position-limiting portions 963 extend to a height greater than the surface of the planar portion of the movable frame 960. As shown in FIG. 25-b, the movable frame 960 has a V-shaped segment 964a opposing the V-shaped segment 914a of the fixed frame 910 and a planar segment 964b opposing the planar segment 914b of the fixed frame 910 on a side opposite to the upper surface of the movable frame 960.

The spring in this embodiment is also a flat spring. The flat spring 953 has a piezoelectric ceramic mounting portion 956 at its center. As shown in FIG. 13, piezoelectric ceramic axial positioning portions 953a are respectively provided on the front and rear sides of the piezoelectric ceramic mounting portion 956 along the optical axis direction. As illustrated in FIG. 14, the flat spring 953 has two spring arms 953b respectively on two sides of the middle portion of the flat spring.

The assembly procedure of the piezoelectric-ultrasonic-driving camera 900 is shown in FIG. 10, FIG. 11-a, FIG. 11-b, and FIG. 14. The ultrasonic drive assembly 950 consists of an ultrasonic piezoelectric ceramic 951, a cylindrical super-hard alloy block 951a, a piezoelectric ceramic FPC 952, a flat spring 953, and a steel plate 954. In preparation, the ultrasonic piezoelectric ceramic 951 and the cylindrical super-hard alloy block 951a are first bonded together to form an integrated unit. Subsequently, for the assembly of the ultrasonic drive assembly 950, as shown in FIG. 14, the ultrasonic piezoelectric ceramic 951 is attached to the piezoelectric ceramic FPC 952. This combined unit is then adhered to the piezoelectric ceramic mounting portion 956 at the center of the flat spring 953, ensuring that along the optical axis direction the ultrasonic piezoelectric ceramic 951 is positioned between the two piezoelectric ceramic Z-axis positioning portions 953a as depicted in FIG. 13 and FIG. 14. As shown in FIG. 14, the steel plate 954 is attached to the positioning portion 962 formed on the upper surface of the movable frame 960.

During the installation of the piezoelectric-ultrasonic-driving camera 900, the movable frame 960 and the fixed frame 910 are first aligned and positioned based on the alignment where the V-shaped segment 914a and planar segment 914b of the fixed frame 910 and the corresponding V-shaped segment 964a and planar segment 964b of the movable frame 960 face each other to form gaps JX. After positioning the movable frame 960 and fixed frame 910 as described, the piezoelectric ceramic mounting portion 956 at the center of the flat spring 953 of the ultrasonic drive assembly 950 is aligned with the two position-limiting portions 963 on the upper surface of the movable frame 960 and the steel plate 954 is installed on the steel plate mounting surface 962 of the movable frame 960. Once installed, the super-hard alloy block 951a contacts the surface of the steel plate. Next, the two spring arms 953b of the flat spring 953 are pressed downward and respectively engaged with the spring positioning portions 913 of the fixed frame 910 at the positions shown in FIG. 8, FIG. 10, FIG. 11-a, FIG. 11-b, and FIG. 14. The rear sides of the two spring arms 953b abut the contact surfaces of the spring positioning portions 913. In this way, the piezoelectric ceramic achieves precise installation positioning in the X, Y, and Z axes.

After assembly, as shown in FIG. 10, FIG. 11-a, FIG. 11-b, and FIG. 14, the flat spring 953 undergoes elastic deformation due to the pressing installation on both sides, generating stress. This stress produces a resultant downward pressing force on the inner surface of the central piezoelectric ceramic mounting portion 956, directed towards the ultrasonic piezoelectric ceramic 951 and the super-hard alloy block 951a. Consequently, the super-hard alloy block 951a exerts a pressing force on the steel plate 954 fixed to the movable frame 960. This pressing force is also transmitted to the V-shaped segment 964a and planar segment 964b on both sides of the movable frame 960, creating two component forces. These forces press, via the micro-balls, against the corresponding V-shaped segment 914a and planar segment 914b of the fixed frame 910.

Thus, as illustrated in the enlarged views of portions C and D of FIG. 11-a and FIG. 11-b, the surfaces of the V-shaped segment 964a and planar segment 964b and those of the V-shaped segment 914a and planar segment 914b press against the micro-balls within the formed gaps JX. This interaction establishes two columns of micro-ball guidance parallel to the optical axis.

When an electrical signal is applied to the ultrasonic drive assembly 950, the ultrasonic piezoelectric ceramic 951 generates elliptical vibrations. The two super-hard alloy blocks 951a bonded to the working surface of the ultrasonic piezoelectric ceramic 951 sequentially push against the surface of the steel plate 954 according to the electrical signal and control sequence. This action drives the movable frame 960, so that the V-shaped segment 964a and planar segment 964b of the movable frame 960 and the V-shaped segment 914a and planar segment 914b of the fixed frame 910 press against the micro-balls, causing them to roll. As a result, the movable frame 960 moves linearly relative to the fixed frame 910 along the direction parallel to the optical axis. This enables the movable frame 960, to which the lens is fixed, to move relative to the chip substrate SB fixed to the fixed frame 910, thereby achieving autofocus.

Due to the constraint provided by the position-limiting portions 963 located on the surface of the movable frame 960, the ultrasonic piezoelectric ceramic 951 of the ultrasonic drive assembly 950 can be accurately positioned in the X-axis direction (perpendicular to the optical axis) on the surface of the movable frame 960. This prevents left-right deviation, improving installation precision and reducing drive errors.

Additionally, after assembly, when the solvent used is water-soluble, the component can undergo a pure water cleaning process. In this case, the solvent dissolves, and after cleaning, the micro-ball layer remains-either fully or partially-on the surface of the micro-ball guidance portions. If the solvent is non-water-soluble, it does not readily dissolve in water and can therefore remain on the surfaces of the micro-ball guidance portions together with the micro-balls. When the solvent is non-volatile, the situation is similar to the above. If the solvent is volatile, it evaporates after application, leaving only the micro-balls on the surfaces of the micro-ball guidance portions. This condition is more suitable for pure water cleaning process.

For limiting the position of the piezoelectric ceramic in the X-axis direction, the position-limiting portions may also be provided on the flat spring 953 or on the fixed frame 910. As two further examples of this embodiment, focusing specifically on the different configurations of the position-limiting portions on the spring and the fixed frame, these are described respectively as Embodiment 2-2 and Embodiment 2-3]with reference to FIG. 28 to FIG. 30. Other aspects that are consistent with Embodiment 2-1 will not be repeated. Regarding details of Embodiment 2-1 that are also applicable to Embodiment 2-2 but were not elaborated earlier, these will be briefly noted in the explanation of Embodiment 2-2.

### Embodiment 2-2:

As shown in FIG. 30, two position-limiting portions 953c are formed by bending on both sides in the X-direction of the piezoelectric ceramic mounting portion 956 of the flat spring 953, typically through sheet metal processing. These portions are used to define the position and ensure the precision of the ultrasonic piezoelectric ceramic 951 in the X-direction.

In the Z-axis direction, two piezoelectric ceramic Z-axis positioning portions 953a, identical to those in Embodiment 2-1, are provided. After assembly, these features establish the positioning of the ultrasonic piezoelectric ceramic 951 along the Z-axis.

In the Y-axis direction, positioning is achieved through the pressing force exerted by the inner surface of the piezoelectric ceramic mounting portion 956. As illustrated in the enlarged view of portion E of FIG. 31-b, the pressing contact between the steel plate mounting surface 962 of the movable frame 960, the steel plate 954, the super-hard alloy block 951a, and the ultrasonic piezoelectric ceramic 951 collectively determines the Y-axis position of the ultrasonic drive assembly 950 and the ultrasonic piezoelectric ceramic 951.

As shown in FIG. 28, FIG. 29, and FIG. 32, unlike Embodiment 2-1, only the steel plate mounting surface 962 is provided on the upper surface of the movable frame 960.

Therefore, by arranging the position-limiting portions 953c on the flat spring 953, the X-axis position of the ultrasonic piezoelectric ceramic 951 of the ultrasonic drive assembly 950 can also be accurately constrained, preventing left-right displacement. This improves installation accuracy and reduces drive errors. Simultaneously, similar to Embodiment 2-1, positional precision in both the Y-axis and Z-axis directions is also ensured.

### Embodiment 2-3:

As shown in FIG. 36, two position-limiting portions 973 are integrally formed on the central portion of the upper surface of the fixed frame 910. These positioning portions serve to position the ultrasonic piezoelectric ceramic 951 on its left and right sides in the X-direction, preventing positional deviation of the ultrasonic piezoelectric ceramic 951 along the X-axis. Through-holes 965 are provided on both sides in the X-direction at the steel plate mounting surface 962 of the planar portion 966 of the movable frame 960. The portion between these two through-holes 965 constitutes the steel plate mounting surface 962 for installing the steel plate 954. As illustrated in FIG. 33, FIG. 34, FIG. 35-a, and FIG. 35-b, after assembly, the position-limiting portions 973 on the fixed frame 910 extend through the through-holes 965 provided in the planar portion 966 of the movable frame 960. Consequently, components of the ultrasonic drive assembly 950, including the ultrasonic piezoelectric ceramic 951, are constrained in the X-axis direction between the two position-limiting portions 973 of the ultrasonic piezoelectric ceramic.

Simultaneously, similar to Embodiment 2-1 and Embodiment 2-2, positional precision in both the Y-axis and Z-axis directions is also ensured.

The configuration of the present disclosure adopts an ultrasonic piezoelectric drive structure utilizing micro-ball guidance and flat spring pressing. This significantly reduces sliding friction resistance compared to the conventional guide-post guidance method, resulting in smoother drive.

Providing position-limiting portions for the piezoelectric ceramic on the movable frame, fixed frame, or spring effectively controls the precision of the piezoelectric ceramic during installation and operation. This improves installation accuracy and reduces positional deviation as well as drive errors.

The micro-ball guidance in this embodiment employs a solvent with low viscosity, good lubricity, and superior fluidity compared to gel-like substances such as lubricating grease. This reduces viscous drag during the device's operation relative to conventional designs that use lubricating grease, leading to better and smoother driving performance. Moreover, when a volatile solvent is used, the solvent evaporates after the micro-ball mixture is applied, leaving only the micro-balls on the guide surfaces. This facilitates pure water cleaning process.

### Embodiment 3:

FIG. 15 is a perspective side view of a piezoelectric-SIDM-driving camera 1000 of the present disclosure. The camera employs a piezoelectric SIDM as the driving component and utilizes a micro-ball guidance mechanism. The camera includes a lens LU, a piezoelectric SIDM drive assembly 1050, a fixed frame 1010, a movable frame 1060, and a chip substrate SB carrying a photosensitive chip.

As depicted in FIG. 15, FIG. 23, and FIG. 24, the chip substrate SB carrying the photosensitive chip is provided at a rear portion of the fixed frame 1010. A front portion of the fixed frame is generally rectangular, featuring a circular opening at the front end in the optical axis direction. This structure accommodates the movable frame 1060, which holds the lens LU. A positioning portion DW for positioning the piezoelectric SIDM drive assembly 1050 is provided on the fixed frame 1010. In this embodiment, the drive assembly is secured by fixing screws. Alternatively, other fastening methods may also be used. A photoelectric sensor PI for detecting a displacement of the movable frame 1060 is positioned on the rear portion of the fixed frame.

A V-shaped segment 1014a and a planar segment 1014b which are parallel to the optical axis are provided on the upper surface of the front portion of the fixed frame 1010. The surfaces of these segments are each coated with a micro-ball layer composed of micro-balls. Regarding the method of applying the micro-balls, as illustrated in FIG. 26, a specified quantity of micro-balls is uniformly mixed with a solvent in a container at a predetermined ratio. Subsequently, as shown in FIG. 27, the mixture containing the micro-balls and solvent is applied in a controlled amount to the surfaces of the V-shaped segment 1014a and planar segment 1014b. The solvent may be a lubricant or lubricating oil characterized by low viscosity and moderate fluidity, which can be dry, wet, or semi-wet in form. It may also be water-soluble or non-water-soluble, volatile or non-volatile.

As shown in FIG. 24, the lens LU is fixed on the movable frame 1060 via a lens positioning hole 1061. Supports 1062a and 1062b for the flat spring 1040 are provided on the upper surface of the movable frame 1060. As shown in FIG. 25-c, the movable frame 1060 has a V-shaped segment 1064a opposing the V-shaped segment 1014a of the fixed frame 1010 and a planar segment 1064b opposing the planar segment 1014b of the fixed frame 910 on a side opposite to the upper surface of the movable frame 1060.

As shown in FIG. 23 and FIG. 24, a laminated piezoelectric ceramic 1051, a carbon fiber rod 1052, and a counterweight 1053 made of a tungsten alloy are formed on the piezoelectric SIDM assembly 1050.

As shown in FIG. 24, a V-shaped pressing portion 1054c is provided at the central portion of the flat spring 1054.

As shown in FIG. 24, a through-hole configured to mate with the positioning portion DW of the fixed frame 1010 is formed at the rear portion of a drive support 1055. The bottom surface of the drive support is formed into a semi-circular micro-ball rolling surface 1055a.

The following describes the installation of the movable frame 1060, piezoelectric SIDM drive assembly 1050, flat spring 1054, and drive support 1055 onto the fixed frame 1010 as illustrated in FIG. 24. As shown in enlarged views of portions C and D of FIG. 17, FIG. 19-a, and FIG. 19-b, the V-shaped segment 1014a and planar segment 1014b of the fixed frame and the V-shaped segment 1064a and planar segment 1064b of the movable frame 1060 face each other to form a V-shaped gap and a planar gap. Within these gaps, micro-ball layers composed of micro-balls are formed. The rolling surfaces for the micro-balls are the surfaces of the V-shaped segment 1064a, planar segment 1064b, V-shaped segment 1014a, and planar segment 1014b. As shown in FIG. 24, the flat spring 1054 is oriented with the opening of its V-shaped pressing portion 1054c facing upward. As illustrated in the enlarged views of portions C and D of FIG. 19-a and FIG. 19-b, the spring arms 1054a and 1054b are installed between the spring supports 1062a and 1062b of the movable frame 1060. Further, the piezoelectric SIDM drive assembly 1050, formed in advance by bonding the laminated piezoelectric ceramic 1051, carbon fiber rod 1052, and counterweight 1053 together, is positioned. One end of this assembly, using the outer circumference of the counterweight 1053 as a reference, is placed and bonded to a SIDM fixing portion 1015 of the fixed frame 1010. The other end thereof, using the outer circumference of the carbon fiber rod 1052 as a reference, is seated into the V-shaped pressing portion 1054c of the pre-installed flat spring 1054. A volatile solvent uniformly mixed with micro-balls (MB) and containing 1% to 10% oily substance is applied to the semi-circular inner micro-ball rolling surface 1055a of the drive support 1055. After the volatile solvent evaporates, the oily substance forms an oily film on the micro-balls and the micro-ball rolling surface 1055a. The adhesive force of the oily film secures the micro-balls to the micro-ball rolling surface 1055a. The drive support 1055 is then fixed to the positioning portion DW of the fixed frame 1010 using fixing screws. This makes the piezoelectric SIDM drive assembly 1050 and the fixed frame 1010 an integrated fixed part. As shown in FIG.. 15 and FIG. 24, the drive support 1055 is fixed to the fixed frame 1010, thereby becoming an integral part of the fixed structure. As illustrated in FIG. 21, at the central portion of the flat spring 1054, the V-shaped pressing surface of the V-shaped pressing portion 1054c presses against the outer circumference of the carbon fiber rod 1052 of the piezoelectric SIDM drive assembly 1050. This engagement fixes the flat spring 1054 relative to the carbon fiber rod 1052 in both the X-axis and Y-axis directions. As shown in FIG. 15, FIG. 17, FIG. 19-a, FIG. 19-b, and FIG. 21, On the side opposite to where the V-shaped pressing portion 1054c engages with the carbon fiber rod 1052 serving as the driving component, a circular gap is formed between the semi-circular inner micro-ball rolling surface 1055a of the drive support 1055 and the outer surface of the carbon fiber rod 1052 of the piezoelectric SIDM drive assembly 1050. A micro-ball layer composed of micro-balls is arranged in the circular gap.

On both sides of the flat spring 1054, along the Z-axis direction, the spring arms 1054a and 1054b are restrained by the leaf spring Z-axis limiting portions 1062c located at both ends of the spring supports 1062a and 1062b on the movable frame 1060. This restrains the flat spring 1054 in the Z-axis direction relative to the movable frame 1060, making the flat spring 1054 part of the movable member. In the X-axis direction, the spring supports 1062a and 1062b on the movable frame 1060 and the corresponding spring arms 1054a and 1054b merely press against each other without being rigidly fixed. Therefore, the position of the flat spring 1054 in the X-axis direction is not fixed relative to the movable frame 1060. Instead, through the engagement of the V-shaped pressing portion 1054c with the outer circumference of the carbon fiber rod 1052, the flat spring 1054 remains movable along the X-axis direction. The relationship between these components is thus limited to that required for frictional drive, establishing the necessary pressing force and friction between the driving and driven parts, without providing the guiding function seen in prior art designs. Consequently, this arrangement, together with the micro-ball guidance formed by the V-shaped segment 1014a and planar segment 1014b of the fixed frame and the opposing V-shaped segment 1064a and planar segment 1064b of the movable frame 1060, which create the V-shaped gap JX and planar gap JX containing the micro-ball layers, avoids creating dual or interfering guidance mechanisms. In this way, the configuration of the present disclosure resolves the dual function of the carbon fiber rod in conventional SIDM drives, where it acted as both the driving shaft and the guiding element, by dedicating it solely to the driving function. Guidance is accomplished by the aforementioned micro-ball guidance mechanism.

After installation as described, as shown in FIG. 19-a and FIG. 19-b, the flat spring 1054 deforms under load because its free-state shape differs from its installed-state shape. Specifically, it is compressed on one side by the pressing contact with spring supports 1062a and 1062b and, on the opposite side, by the engagement of its V-shaped pressing portion 1054c with the carbon fiber rod 1052 of the piezoelectric SIDM drive assembly. This deformation generates opposing stresses, which apply a specific force, essentially a preload, to the micro-ball guidance portions formed by the V-shaped segment 1014a and planar segment 1014b of the fixed frame 1010 and the corresponding V-shaped segment 1064a and planar segment 1064b of the movable frame 1060. Consequently, the V-shaped segment 1014a and planar segment 1014b of the fixed frame 1010 and the V-shaped segment 1064a and planar segment 1064b of the movable frame 1060 are pressed against each other via the intervening micro-balls.

When an electrical drive signal is applied to the piezoelectric SIDM drive assembly 1050, the laminated piezoelectric ceramic 1051 extends and contracts axially according to specific pulse patterns. Due to the pressing force generated by the spring pressure between the V-shaped pressing portion 1054c and the carbon fiber rod 1052, a frictional force arises between the flat spring 1054 and the carbon fiber rod 1052. Controlled variations in the pulse signals create axial frictional driving forces in the forward and backward directions. This drives the movable frame 1060 linearly along the direction defined by the micro-ball guidance portions formed by the V-shaped segment 1014a and planar segment 1014b of the fixed frame 1010 and the V-shaped segment 1064a and planar segment 1064b of the movable frame 1060. During this motion, the micro-balls roll correspondingly on the surfaces of the micro-ball guidance formed by the V-shaped segment 1014a and planar segment 1014b of the fixed frame 1010 and the V-shaped segment 1064a and planar segment 1064b of the movable frame 1060. Simultaneously, as shown in FIG. 21, on the side opposite to where the flat spring 1054 frictionally engages and drives the carbon fiber rod 1052 of the piezoelectric SIDM drive assembly 1050, micro-balls are arranged to roll within the gap formed between the micro-ball rolling surface 1055a of the drive support 1055 and the outer circumference of the carbon fiber rod 1052. Since the coefficient of rolling friction is lower than that of sliding friction, the micro-ball rolling guidance between the carbon fiber rod 1052 and the drive support 1055, compared to the conventional SIDM friction-clamping method, effectively improves the driving efficiency of the piezoelectric SIDM and reduces frictional resistance.

After assembly, when the solvent used is water-soluble, the component can undergo a pure water cleaning process. In this case, the solvent dissolves, and after cleaning, the micro-ball layer remains-either fully or partially-on the surface of the micro-ball guidance portions. If the solvent is non-water-soluble, it does not readily dissolve in water and can therefore remain on the surfaces of the micro-ball guidance portions together with the micro-balls. When the solvent is non-volatile, the situation is similar to the above. If the solvent is volatile, it evaporates after application, leaving only the micro-balls on the surfaces of the micro-ball guidance portions. This condition is more suitable for pure water cleaning process.

A micro-ball layer is arranged to roll on a rolling surface on the side opposite to the frictional contact surface between the driving component and the driven component. Compared to the conventional method using dual V-shaped support clamping, the configuration of the present disclosure replaces the sliding friction on one support side with micro-ball rolling friction. The reduction in frictional resistance effectively improves the driving efficiency of the piezoelectric SIDM and lowers the overall frictional losses.

The conventional design, in which the carbon fiber rod serves the dual functions of guidance and frictional drive, is revised. It is replaced by a dedicated micro-ball guidance mechanism combined with a dedicated carbon fiber rod frictional drive. This separation resolves the issue of mutual interference between different performance factors in the product, facilitates quality control, and contributes to enhanced product quality.

### Embodiment 4:

This embodiment adopts the same structure as Embodiment 3, differing only in the cross-sectional shape of the micro-ball guidance portion. Therefore, descriptions of identical parts are omitted, and only the differing parts are explained.

As shown in FIG. 25-d-2, a semi-circular segment 1214a and a planar segment 1214b are provided on the upper surface of the fixed frame 1210. Correspondingly, as shown in FIG. 25-d-1, a semi-circular segment 1264a and a planar segment 1264b are arranged on the upper surface of the fixed frame 1210, opposing the upper surface of the movable frame 1260. As illustrated in FIG. 18, FIG. 20-a, and FIG. 20-b, the semi-circular segment 1214a and the planar segment 1214b and the semi-circular segment 1264a and the planar segment 1264b form corresponding gaps after assembly. Micro-ball layers formed by applying a coating of a solvent mixed with micro-balls are arranged in the gaps. The elastic force exerted by the two spring arms 1254a and 1254b of the flat spring 1254 causes the semi-circular segment 1214a, the planar segment 1214b, the semi-circular segment 1264a, and the planar segment 1264b to press against the micro-ball layers. The diameter of the micro-balls is approximately 0.05 mm.

When an electrical drive signal is applied to the piezoelectric SIDM drive assembly, the micro-balls roll relative to the surfaces of the semi-circular segment 1214a, the planar segment 1214b, the semi-circular segment 1264a, and the planar segment 1264b. This causes the movable frame 1260 to move relative to the fixed frame 1210 along the direction defined by the micro-ball guidance portions formed by the semi-circular segment 1214a, the planar segment 1214b, the semi-circular segment 1264a, the planar segment 1264b, and the micro-balls.

The reference guidance formed by the semi-circular segment of the fixed frame and the corresponding semi-circular segment of the movable frame, together with the micro-ball layer in the gap between them, and the guidance formed by the planar segment of the fixed component and the corresponding planar segment of the movable frame, together with the micro-balls in the gap therebetween, achieve the same effect as the V-shaped profile guidance in Embodiment 3. Both can provide guidance positioning and reduce sliding friction, resulting in smooth driving.

The diameter of the micro-balls is smaller than that of conventional balls, allowing for a more compact driving device.

The embodiments of the present disclosure are for illustrative purposes only and do not limit the technical scope of the present disclosure, which is not confined to the range described in the above embodiments. For example, the drive component may also employ a shape memory alloy method, a conventional electromagnetic drive method (such as a voice coil motor VCM), a method using single-layer or multi-layer piezoelectric sheets with spring plates, a piezoelectric ultrasonic or non-ultrasonic drive method, and so forth, without limitation. Furthermore, the solvent refers to a lubricant, oil, mixed liquid, mixture, fluid, semi-fluid, etc., characterized by low viscosity, good lubricity, and moderate fluidity, which may be dry, wet, or semi-wet in form, and possesses the characteristics of being water-soluble or non-water-soluble, volatile or non-volatile. The aforementioned properties of the solution remain unchanged after mixing with the micro-balls. It will be apparent to those skilled in the art that various modifications or improvements can be made to the above-described embodiments. Such modifications or improvements in form also fall within the technical scope of the present disclosure.

The term "V-shaped" as used in the present disclosure refers to a cross-sectional shape resembling the letter "V", an arc, a partial arc, a trapezoid, or any other shape serving a similar function. Unless explicitly indicated with terms such as "earlier," "before," or the like, the execution order of actions, steps, stages, and other processes in the apparatuses, systems, programs, and methods described or shown in the present disclosure is not specifically limited. Furthermore, between two steps, if neither step depends on the output of the other, the two steps may be performed in any order. Regarding the action flows described or illustrated in the present disclosure, even if terms such as "first," "next," etc., are used for convenience of explanation, this does not imply that the actions must be carried out in that order.

## Claims

1. An optical driving device, comprising a fixed member and a movable member,
wherein the fixed member has a first guide surface, and the movable member has a second guide surface, the first guide surface and the second guide surface oppose each other to jointly guide the movable member to move in a linear direction,
wherein the optical driving device further includes a driving member which is between the first guide surface and the second guide surface or parallel to the first guide surface or the second guide surface, a gap is formed between the first guide surface and the second guide surface, and a micro-ball layer composed of a plurality of micro-balls is in the gap, and
wherein the optical driving device further includes a spring that applies interaction forces to the driving member, the fixed member, and the movable member, and the spring is configured to cause the plurality of micro-balls to be pressed against at least one of the first guide surface and the second guide surface.

2. The optical driving device according to claim 1, wherein the spring is configured as a flat spring.

3. The optical driving device according to claim 1, wherein the driving member is configured as a piezoelectric driving member.

4. The optical driving device according to claim 1, wherein the driving member is configured as an electromagnetic driving member.

5. The optical driving device according to claim 1, wherein the driving member is configured as a shape memory alloy driving member.

6. The optical driving device according to claim 1, wherein the driving member is configured a stepping motor.

7. The optical driving device according to claim 1, wherein the first guide surface of the fixed member and the second guide surface of the movable member have opposing V-shaped segments.

8. The optical driving device according to claim 1, wherein the first guide surface of the fixed member and the second guide surface of the movable member have opposing circular or arc-shaped, or semicircular or semi-arc-shaped, or partial circular or partial arc-shaped segments.

9. The optical driving device according to claim 3, wherein the driving member is configured as a piezoelectric electromechanical conversion element that, by utilizing pressing force, causes a friction member and a driven member to press against each other and drives the driven member through friction.

10. The optical driving device according to claim 9, wherein the micro-ball layer is provided on a side opposite to a friction contact surface of the friction member.

11. The optical driving device according to claim 1, wherein the plurality of micro-balls are added into a solvent in a specified amount to form a mixed solvent containing the micro-balls, the mixed solvent is applied on the first guide surface or the second guide surface, and a number of the plurality of micro-balls is determined based on a volume of the gap or an area of the first guide surface or the second guide surface.

12. The optical driving device according to claim 11, wherein the solvent is volatile or non-volatile.

13. The optical driving device according to claim 11, wherein the solvent is water-soluble or non-water-soluble.

14. The optical driving device according to claim 12, wherein the plurality of micro-balls are added into a volatile solvent and applied, so that the volatile solvent evaporates, leaving the plurality of micro-balls to form the micro-ball layer for rolling.

15. The optical driving device according to claim 12, wherein the plurality of micro-balls are added into a volatile solvent containing 1% to 10% of an oily substance and applied, so that the volatile solvent evaporates, forming an oily substance film covering at least one of the plurality of micro-balls, the first guide surface and the second guide surface, and wherein stickiness of the oily substance film retains the plurality of micro-balls on the first guide surface or the second guide surface, forming the micro-ball layer for rolling.

16. The optical driving device according to claim 7, wherein two side surfaces of each V-shaped segment are planar or curved.

17. The optical driving device according to claim 3, wherein the piezoelectric driving member is configured as an ultrasonic piezoelectric driving device including an ultrasonic piezoelectric ceramic, and positioning parts for restricting displacement of the ultrasonic piezoelectric ceramic are provided on front, rear, left, and right sides perpendicular to a working surface of the ultrasonic piezoelectric ceramic.

18. The optical driving device according to claim 17, wherein the positioning parts are disposed on the movable member, the fixed member, or the spring.

19. The optical driving device according to claim 1, wherein the first guide surface and the second guide surface have opposing planar segments.
